Europäisches Patentamt

European Patent Office

Office européen des brevets

(11) Veröffentlichungsnummer: **0 312 875 B1**

(12) **EUROPÄISCHE PATENTSCHRIFT**

(45) Veröffentlichungstag der Patentschrift: **25.03.92**

(51) Int. Cl.⁵: **H01M 8/18**, H01M 4/90

(21) Anmeldenummer: **88116793.6**

(22) Anmeldetag: **10.10.88**

(54) **Redoxbatterie.**

(30) Priorität: **23.10.87 DE 3735992**

(43) Veröffentlichungstag der Anmeldung:
**26.04.89 Patentblatt 89/17**

(45) Bekanntmachung des Hinweises auf die
Patenterteilung:
**25.03.92 Patentblatt 92/13**

(84) Benannte Vertragsstaaten:
**DE ES FR GB GR IT NL**

(56) Entgegenhaltungen:
EP-A- 0 137 990
FR-A- 2 070 648
US-A- 4 543 302

PATENT ABSTRACTS OF JAPAN, Band 11,
Nr. 122 (E-500)[2569], 16. April 1987; & JP-
A-61 269 867 (SUMITOMO ELECTRIC IND.
LTD) 29-11-1986

JOURNAL OF THE ELECTROCHEMICAL SO-
CIETY, Band 132, Nr. 2, Februar 1985, Seiten
269-273; D.Sh. CHENG et al.: "The influence
of thallium on the redox reaction
Cr3 + /Cr2 + "

EXTENDED ABSTRACTS, "Spring meeting",

11.-16. Mai 1980, Band 80-1, Zusammenfassung Nr. 351, Seiten 874-876, Princeton, New
Jersey, US; V. JALAN et al.: "Electrocatalysts
for the Cr + 3/Cr + 2 redox couple"

(73) Patentinhaber: **SIEMENS AKTIENGESELL-
SCHAFT**
**Wittelsbacherplatz 2**
**W-8000 München 2(DE)**

(72) Erfinder: **Heinzel, Angelika, Dr.**
**Merzhauser Strasse 8**
**W-7800 Freiburg(DE)**

## Beschreibung

Die Erfindung betrifft eine Batterie aus Redoxzellen, welche jeweils einen von einem Katholyt durchströmten Elektrodenraum mit einer positiven Elektrode und einen von einem Anolyt durchströmten Elektrodenraum mit einer negativen Elektrode aufweisen, wobei die negative Elektrode einen Katalysator zur Beschleunigung von $Cr^{3+}/Cr^{2+}$-Redoxvorgängen enthält.

Redoxbatterien dienen zur Speicherung elektrischer Energie. Die Energiespeicherung erfolgt dabei mittels Lösungen von Metallionenpaaren mit unterschiedlichem Oxidationszustand. Wenn zwei derartige Ionenpaare, deren Redoxpotentiale genügend weit auseinanderliegen, an zwei verschiedenen Elektroden, die durch eine Membran voneinander getrennt sind, zur Reaktion gebracht werden, dann erhält man eine Spannung, d.h. elektrische Energie (siehe beispielsweise EP-PS 0 143 300).

Redoxpaare der vorstehend genannten Art sind beispielsweise $Fe^{3+}/Fe^{2+}$ und $Cr^{3+}/Cr^{2+}$. In Zellen mit derartigen Redoxpaaren, d.h. in Fe/Cr-Redoxzellen, erfolgt die Speicherung von Energie - beim Anlegen der Ladespannung - über folgende Prozesse:

$$Fe^{2+} \rightarrow Fe^{3+} + e^- \quad (E_0 = +\,0{,}77 \text{ V}) \text{ und}$$
$$Cr^{3+} + e^- \rightarrow Cr^{2+} \quad (E_0 = -\,0{,}41 \text{ V}) ;$$

die Potentialwerte beziehen sich auf die Normal-Wasserstoffelektrode. An der positiven Elektrode werden dabei zweiwertige Eisenionen oxidiert, während an der negativen Elektrode dreiwertige Chromionen reduziert werden. In Umkehrung dieser Prozesse - Reduktion von dreiwertigen Eisenionen ($Fe^{3+}$) an der positiven Elektrode und Oxidation von zweiwertigen Chromionen ($Cr^{2+}$) an der negativen Elektrode - wird die gespeicherte elektrische Energie wieder freigesetzt, wobei an den Elektroden die Entladespannung abgegriffen werden kann. Da die Entladespannung einer einzigen Zelle für technische Anwendungszwecke zu niedrig ist, werden im allgemeinen immer mehrere Redoxzellen elektrisch in Serie geschaltet, wobei Redoxbatterien resultieren.

Redoxzellen werden im allgemeinen mit sauren Elektrolytlösungen betrieben, beispielsweise mit salzsauren Lösungen von Eisenchlorid bzw. Chromchlorid. Die elektrochemischen Reaktionen finden dabei an Elektroden statt, die gegenüber den jeweiligen Elektrolytlösungen, d.h. Kathodenflüssigkeit (Katholyt) bzw. Anodenflüssigkeit (Anolyt) inert sind. Als Elektrodenmaterial, d.h. elektrokatalytisch aktives Material, dient im allgemeinen Kohle oder Graphit (siehe beispielsweise US-PS 3 996 064 und US-PS 4 382 116).

Die Redoxreaktion des Eisens in Redoxzellen bereitet normalerweise keine Probleme; sie läuft im allgemeinen, insbesondere an Graphitmaterialien, mit ausreichender Geschwindigkeit und mit einer Stromausbeute von nahezu 100 % ab. Problematisch dagegen ist die Redoxreaktion des Chroms; diese wird nämlich durch Graphit nicht in ausreichendem Maße katalysiert. Es wurde deshalb bereits versucht, die Graphitelektroden für die Chromreaktion zu aktivieren.

Eine geeignete Maßnahme zur Aktivierung der Chrom-Elektrode ist das Aufbringen von Metallen. So katalysiert beispielsweise Gold die Oxidation des zweiwertigen Chroms und die Reduktion des dreiwertigen Chroms, so daß sowohl für die Entladereaktion als auch für die Ladereaktion eine ausreichende Reaktionsgeschwindigkeit erzielt werden kann. An Gold ist jedoch die Wasserstoffüberspannung geringer als an Graphit. Deshalb tritt in diesem Fall beim Ladeprozeß - als Nebenreaktion der Reduktion des dreiwertigen Chroms - eine unerwünschte Wasserstoffentwicklung auf. Die Stromausbeute des Ladeprozesses liegt daher für den Chromelektrolyten deutlich unter 100 %. Dies hat aber zur Folge, daß der Ladezustand der Chromlösung mit jedem Zyklus (weiter) hinter dem Ladezustand der Eisenlösung zurückbleibt.

Die Differenz zwischen dem Ladezustand der Chromlösung und demjenigen der Eisenlösung muß extern mit Hilfe einer speziellen Zelle ausgeglichen werden (siehe dazu beispielsweise: M.A. Reid und L.H. Thaller "Improvement and Scale-up of the NASA Redox Storage System", DOE/NASA/12726-6, NASA TM-81632, 1981). Die bisher für eine derartige Ausgleichszelle ("rebalance cell") entwickelten Konzepte verbrauchen aber Energie, so daß der Energiewirkungsgrad des Redoxsystems vermindert wird. Dabei ist der Energiewirkungsgrad des Energiespeichers um so niedriger, je höher die Wasserstoffentwicklungsrate an der Chrom-Elektrode und damit die erforderliche Leistung der Ausgleichszelle ist.

Ein weiteres Problem ergibt sich in diesem Zusammenhang hinsichtlich der Stoffbilanz. Der bei der Chromreduktion als Nebenprodukt gebildete Wasserstoff stellt nämlich einen Substanzverlust dar, der - im Interesse einer langen Lebensdauer des Gesamtsystems - wieder ausgeglichen werden muß, um einen geschlossenen Kreislauf zu ermöglichen.

Um die Wasserstoffbildung zu verringern, wurde bereits versucht, neben Gold einen zweiten Katalysator einzusetzen. Dabei handelt es sich um ein Metall, das eine hohe Wasserstoffüberspannung besitzt. Bekannt sind für diesen Zweck Blei und Cadmium (siehe beispielsweise US-PS 4 192 910 und US-PS 4 270 984) sowie Thallium (siehe EP-PS 0 137 990). Insbesondere im praktischen Einsatz erweist sich aber auch bei der Verwendung derartiger Metalle - in Kombination mit Gold - die Wasserstoffüberspannung als unzureichend, um die Wasserstoffentwicklung in ausreichendem Maße unterdrücken zu können.

Aufgabe der Erfindung ist es, eine Batterie aus Redoxzellen der eingangs genannten Art mit einem Katalysator zur Beschleunigung von $Cr^{3+}/Cr^{2+}$-Redoxvorgängen derart auszugestalten, daß die Stromausbeute der Redoxreaktion des Chroms optimiert und damit für das Gesamtsystem ein möglichst hoher Energiewirkungsgrad erzielt wird.

Dies wird erfindungsgemäß dadurch erreicht, daß der Katalysator eine Kombination von Gold (Au), Thallium (Tl), Blei (Pb) und Wismut (Bi) ist.

Mit dem Au/Tl/Pb/Bi-Kombinationskatalysator gemäß der Erfindung wird eine optimale Katalyse der Reaktion an der Chrom-Elektrode erreicht. Damit ergeben sich für das Redoxsystem eine Reihe wesentlicher Vorteile. So wird die Wasserstoffentwicklung weitgehend unterdrückt und dadurch eine Verringerung des Ungleichgewichts des Ladezustandes der beiden Energieträger bewirkt. Außerdem tritt ein geringerer Substanzverlust auf, der zu einer entsprechenden Wartungsarmut der Batterie führt. Ferner benötigt eine gegebenenfalls vorhandene Ausgleichszelle eine geringere Leistung, was Auswirkungen auf den Energieverbrauch und die Investitionskosten der Anlagenperipherie hat. Darüber hinaus bringt der Katalysator nach der Erfindung eine Erhöhung der Stromdichte mit sich, was einer Verbesserung der Leistungsdichte entspricht, und ebenfalls zu Einsparungen bei den Investitionen führt.

Bei einer bevorzugten Ausführungsform der erfindungsgemäßen Redoxbatterie weist die negative Elektrode einen aus Gold, Thallium, Blei und Wismut bestehenden katalytischen Überzug auf. Dieser Überzug kann auf der negativen Elektrode direkt erzeugt werden, beispielsweise durch Imprägnierung mit (wäßrigen) Lösungen von entsprechenden Metallsalzen. Vorzugsweise werden die Metalle jedoch in der Weise auf die negative Elektrode aufgebracht, daß der Anolyt, d.h. der Chromelektrolyt, Gold-, Thallium-, Blei- und Wismutsalze enthält. Beim Laden, d.h. unter reduzierenden Bedingungen, scheiden sich dann die entsprechenden Metalle - gemäß ihrer Stellung in der elektrochemischen Spannungsreihe - an der negativen Elektrode (Chrom-Elektrode) ab.

Die Konzentration der Metallsalze im Anolyt wird so gewählt, daß auf der negativen Elektrode - unter der Voraussetzung, daß eine 100 %ige Abscheidung erfolgt - folgende Oberflächenkonzentrationen, jeweils bezogen auf 1 cm², gebildet werden: 0,02 bis 1 mg Au, 0,2 bis 40 mg Tl, 0,2 bis 10 mg Pb und 0,2 bis 10 mg Bi. Diese Werte stellen im übrigen - unabhängig von der Art und Weise der Aufbringung der Metalle auf die Elektrodenoberfläche - die bevorzugten Konzentrationsbereiche dar. Besonders vorteilhaft weist die negative Elektrode etwa folgende Oberflächenkonzentrationen auf: 0,2 mg/cm² Au, 8 mg/cm² Tl, 2 mg/cm² Pb und 2 mg/cm² Bi.

In Redoxzellen bzw. -batterien ist die Elektrolytflüssigkeit im allgemeinen wäßrige Salzsäure, wobei 3 M HCl, d.h. 3-molare Salzsäure, besonders bevorzugt wird. Werden dem Anolyt Metallsalze zugesetzt, so sind dies deshalb vorzugsweise Metallchloride. Als Chloride dienen insbesondere folgende Verbindungen: $AuCl_3$, $TlCl_3$, $PbCl_2$ und $BiCl_3$. Dabei kann $AuCl_3$ auch in Form von $HAuCl_4$ vorliegen; anstelle von $TlCl_3$ kann auch $TlCl$ verwendet werden.

Als Elektrodenmaterialien gelangen in der erfindungsgemäßen Redoxbatterie insbesondere Kohle und Graphit, beispielsweise in Form eines Filzes, zum Einsatz. Bevorzugt besteht dabei die negative Elektrode aus kunststoffgebundenem Graphit und die positive Elektrode ebenfalls. Die positive Elektrode ist vorzugsweise eine Eisen-Elektrode, d.h. eine Elektrode, an der $Fe^{3+}/Fe^{2+}$-Redoxvorgänge stattfinden. Daneben kann die positive Elektrode auch eine Mangan- oder Vanadin-Elektrode sowie eine Brom-Elektrode sein. Ist die erfindungsgemäße Redox-Batterie eine Fe/Cr-Batterie, d.h. weist sie als positive Elektrode eine Eisen-Elektrode und als negative Elektrode eine Chrom-Elektrode auf, so enthält die jeweilige Elektrolytflüssigkeit bevorzugt 1 M $FeCl_2$ bzw. 1 M $CrCl_3$. Der Katholyt ist somit vorzugsweise 1 M $FeCl_2$/3 M HCl, der Anolyt vorzugsweise 1 M $CrCl_3$/3 M HCl. Die positive und die negative Elektrode bzw. die entsprechenden Elektrodenräume (und somit auch Katholyt und Anolyt) sind dabei durch eine Ionenaustauschermembran voneinander getrennt.

Anhand von Ausführungsbeispielen und Figuren soll die Erfindung noch näher erläutert werden.

Folgende negative Elektroden für die Chromreaktion, jeweils mit einer Elektrodenfläche von 5 cm², wurden untersucht:

1. Eine Au/Tl/Pb/Bi-Elektrode nach der Erfindung mit 0,2 mg/cm² Au, 8 mg/cm² Tl, 2 mg/cm² Pb und 2 mg/cm² Bi (Elektrode 1).

2. Eine Au/Pb-Elektrode entsprechend dem Stand der Technik (siehe beispielsweise US-PS 4 192 910 bzw. EP-PS 0 020 664) mit 0,2 mg/cm² Au und 2 mg/cm² Pb (Elektrode 2).

3. Eine Au/Tl-Elektrode entsprechend dem Stand der Technik (siehe EP-PS 0 137 990) mit 0,2 mg/cm² Au und 8 mg/cm² Tl (Elektrode 3).

4. Eine Pb/Bi-Elektrode mit 2 mg/cm² Pb und 2 mg/cm² Bi zum Vergleich (Elektrode 4).

Als Elektrodenmaterial diente dabei jeweils mit Kunststoff gebundener Graphit. Das Katalysatormaterial wurde in der Weise auf die Elektrode aufgebracht, daß der Elektrolytflüssigkeit, d.h. dem Anolyt, jeweils entsprechende Mengen an Metallchloriden zugesetzt wurden. Als Anolyt diente 1 M $CrCl_3$/3 M HCl. In etwa die gleichen Ergebnisse werden aber auch erhalten, wenn als Elektrolytflüssigkeit 1 M $CrCl_3$/1 M $FeCl_2$/3 M HCl verwendet wird.

Die elektrochemischen Untersuchungen an den vorstehend genannten Elektroden erfolgten zunächst mittels der Dreieckspannungsmethode, die einen schnellen Überblick über die Qualität von Elektroden- bzw. Katalysatormaterialien erlaubt. Dabei zeigte sich, daß die erreichbaren Stromdichten - sowohl für die $Cr^{3+}$-Reduktion als auch für die $Cr^{2+}$-Oxidation - bei der Elektrode 1 am größten sind. Die anderen drei untersuchten Elektroden ergaben für die Redoxreaktion des Chroms wesentlich geringere Stromdichten.

Das wichtigste Kriterium für die Qualität eines Katalysators für die Chromreaktion ist der Anteil der Wasserstoffentwicklung am Reduktionsstrom. Zu diesem Zweck werden die Elektroden in einer Strömungsapparatur angeordnet und mit einem konstanten Strom belastet, und dann wird die Wasserstoffentwicklungsrate bei der Reduktion von $Cr^{3+}$ zu $Cr^{2+}$ durch volumetrische Bestimmung der entstandenen Gasmenge ermittelt. Die Gasmenge ist dabei abhängig vom Ladezustand des Chromelektrolyten: Bei geringem Ladezustand, d.h. einem hohen Konzentrationsverhältnis von $Cr^{3+}$:$Cr^{2+}$, erfolgt keine Wasserstoffentwicklung, bei höheren Ladezuständen setzt dann die Gasentwicklung ein.

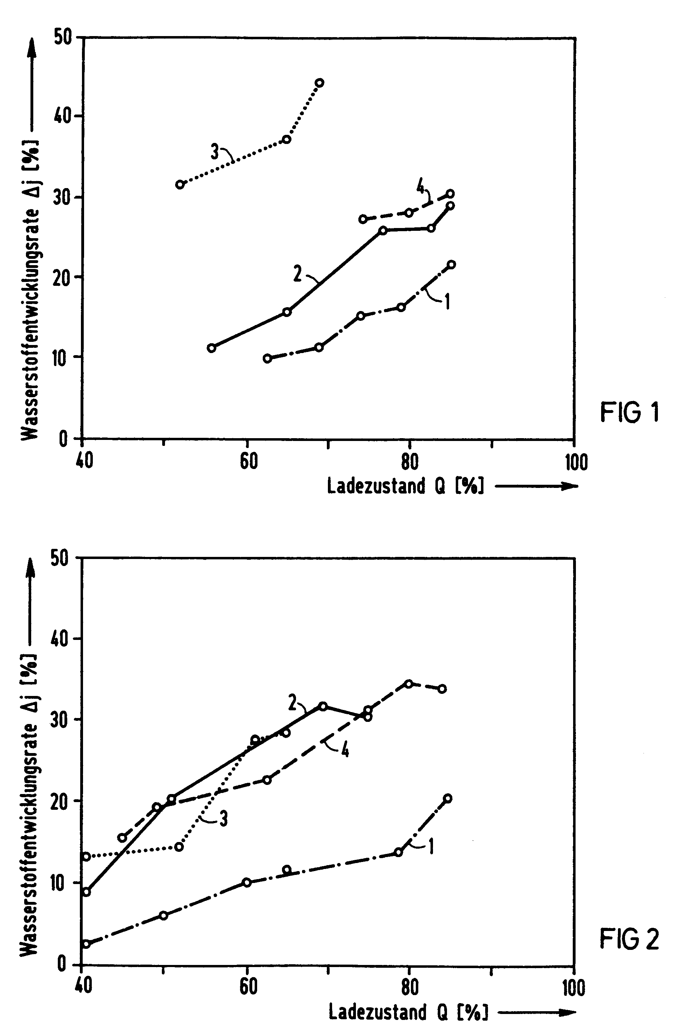

Die erhaltenen Versuchsergebnisse sind den Figuren 1 und 2 zu entnehmen (die Kennlinien 1, 2, 3 und 4 gelten jeweils für die Elektroden mit der entsprechenden Nummer). Dabei ist jeweils für die vier vorstehend beschriebenen Elektroden die Wasserstoffentwicklungsrate (angegeben als Prozentsatz des gesamten Stromflusses) in Abhängigkeit vom Ladezustand graphisch dargestellt (der Ladezustand wurde mittels einer Eichkurve über das Ruhepotential der Meßelektrode berechnet). Die Strömungsgeschwindigkeit des Elektrolyten (1 M $CrCl_3$/1 M $FeCl_2$/3 M HCl) an der Elektrodenoberfläche betrug jeweils 250 ml/min. Die Stromdichte lag jeweils bei 40 mA/cm², d.h. der Strom betrug 200 mA.

Den Figuren 1 und 2 ist zu entnehmen, daß die Elektrode 1, d.h. die Elektrode nach der Erfindung mit einem Au/Tl/Pb/Bi-Kombinationskatalysator, die weitaus kleinste Wasserstoffentwicklungsrate zeigt, d.h. sie ist den bekannten Au/Pb- und Au/Tl-Elektroden (und auch einer Pb/Bi-Elektrode) weit überlegen. Dies gilt im übrigen sowohl für einen chrom- und eisenhaltigen Elektrolyt als auch für einen lediglich Chromionen enthaltenden Elektrolyt, d.h. der Einfluß von Eisenionen auf die Reduktion von Chromionen ist offensichtlich sehr gering. Auch das Elektrodenmaterial übt, zumindest was die Elektrode 1 betrifft, offensichtlich keinen gravierenden Einfluß aus. Während nämlich den Elektroden nach Fig. 1 ein fluorkunststoffgebundenes feinflockiges Material aus Naturgraphit zugrundelag, wurde bei den Elektroden nach Fig. 2 ein fluorkunststoffgebundener grobflockiger Naturgraphit eingesetzt (Kunststoffbindemittel: Polyvinylidenfluorid).

Die Untersuchungen an den verschiedenen Elektroden zeigten ferner, daß mit dem Kombinationskatalysator nach der Erfindung, insbesondere bei hohen Ladezuständen, höhere Reduktionsströme realisiert werden können als bei den üblichen Katalysatoren. Eine verbesserte Stromdichte, im vorliegenden Fall für den Entladeprozeß, bedeutet aber eine höhere flächenbezogene Leistung der Batterie. Um die gleiche Leistung zu erzielen, kann die Elektrodenoberfläche somit verringert werden, d.h. die erfindungsgemäße Redoxbatterie kann - bei gleicher Leistung -kleinere Abmessungen aufweisen als andere Batterien.

**Patentansprüche**

1. Batterie aus Redoxzellen, enthaltend einen von einem Katholyt durchströmten Elektrodenraum mit einer positiven Elektrode und einen von einem Anolyt durchströmten Elektrodenraum mit einer einen Katalysator zur Beschleunigung von $Cr^{3+}$/$Cr^{2+}$-Redoxvorgängen aufweisenden negativen Elektrode, **dadurch gekennzeichnet,** daß der Katalysator eine Kombination von Gold (Au), Thallium (Tl), Blei (Pb) und Wismut (Bi) ist.

2. Batterie nach Anspruch 1, **dadurch gekennzeichnet,** daß die negative Elektrode einen katalytischen Überzug aus Gold, Thallium, Blei und Wismut aufweist.

3. Batterie nach Anspruch 1 oder 2, **dadurch gekennzeichnet,** daß die negative Elektrode eine Oberflächenkonzentration von 0,02 bis 1 mg Au, 0,2 bis 40 mg Tl, 0,2 bis 10 mg Pb und 0,2 bis 10 mg Bi aufweist, jeweils bezogen auf einen Quadratzentimeter.

4. Batterie nach Anspruch 3, **dadurch gekennzeichnet,** daß die negative Elektrode etwa folgende Oberflächenkonzentrationen aufweist: 0,2 mg/cm² Au, 8 mg/cm² Tl, 2 mg/cm² Pb und 2 mg/cm² Bi.

5. Batterie nach Anspruch 1, **dadurch gekennzeichnet,** daß der Anolyt Gold-, Thallium-, Blei- und Wismutsalze enthält.

6. Batterie nach Anspruch 5, **dadurch gekennzeichnet,** daß der Anolyt Metallchloride enthält.

7. Batterie nach einem oder mehreren der Ansprüche 1 bis 6, **dadurch gekennzeichnet,** daß die negative Elektrode aus kunststoffgebundenem Graphit besteht.

8. Batterie nach einem oder mehreren der Ansprüche 1 bis 7, **dadurch gekennzeichnet,** daß an der positiven Elektrode $Fe^{3+}/Fe^{2+}$-Redoxvorgänge stattfinden.

9. Batterie nach einem oder mehreren der Ansprüche 1 bis 8, **dadurch gekennzeichnet,** daß die positive Elektrode aus kunststoffgebundenem Graphit besteht.

## Claims

1. Battery comprising redox cells containing an electrode chamber through which a catholyte flows and having a positive electrode, an electrode chamber through which an anolyte flows and having a negative electrode with a catalyst for accelerating $Cr^{3+}/Cr^{2+}$ redox processes, characterised in that the catalyst is a combination of gold (Au), thallium (Tl), lead (Pb) and bismuth (Bi).

2. Battery according to claim 1, characterised in that the negative electrode has a catalytic coating of gold, thallium, lead and bismuth.

3. Battery according to claim 1 or 2, characterised in that the negative electrode has a surface concentration of 0.02 to 1 mg Au, 0.2 to 40 mg Tl, 0.2 to 10 mg Pb and 0.2 to 10 mg Bi, each based on one centimetre squared.

4. Battery according to claim 3, characterised in that the negative electrode has approximately the following surface concentrations: 0.2 mg/cm$^2$ Au, 8 mg/cm$^2$ Tl, 2 mg/cm$^2$ Pb and 2 mg/cm$^2$ Bi.

5. Battery according to claim 1, characterised in that the anolyte contains salts of gold, thallium, lead and bismuth.

6. Battery according to claim 5, characterised in that the anolyte contains metal chlorides.

7. Battery according to one or more of claims 1 to 6, characterised in that the negative electrode comprises plastics-bound graphite.

8. Battery according to one or more of claims 1 to 7, characterised in that $Fe^{3+}/Fe^{2+}$ redox

processes take place on the positive electrode.

9. Battery according to one or more of claims 1 to 8, characterised in that the positive electrode comprises plastics-bound graphite.

## Revendications

1. Batterie de piles rédox, comportant un compartiment d'électrode parcouru par un catholyte et ayant une électrode positive et un compartiment d'électrode parcouru par un anolyte et ayant une électrode négative présentant un catalyseur d'accélération des processus rédox $Cr^{3+}/Cr^{2+}$, caractérisée en ce que le catalyseur est une combinaison d'or (Au), de thallium (Tl), de plomb (Pb) et de bismuth (Bi).

2. Batterie suivant la revendication 1, caractérisée en ce que l'électrode négative comporte un revêtement catalytique en or, en thallium, en plomb et en bismuth.

3. Batterie suivant la revendication 1 ou 2, caractérisée en ce que l'électrode négative a une concentration superficielle de 0,02 à 1 mg de Au, de 0,2 à 40 mg de Tl, de 0,2 à 10 mg de Pb, de 0,2 à 10 mg de Bi, chaque concentration étant rapportée à un centimètre carré.

4. Batterie suivant la revendication 3, caractérisée en ce que l'électrode négative présente environ les concentrations superficielles suivantes : 0,2 mg/cm$^2$ de Au, 8 mg/cm$^2$ de Tl, 2 mg/cm$^2$ de Pb et 2 mg/cm$^2$ de Bi.

5. Batterie suivant la revendication 1, caractérisée en ce que l'anolyte contient des sels d'or, des sels de thallium, des sels de plomb et des sels de bismuth.

6. Batterie suivant la revendication 5, caractérisée en ce que l'anolyte contient des chlorures métalliques.

7. Batterie suivant l'une ou plusieurs des revendications 1 à 6, caractérisée en ce que l'électrode négative est en graphite lié par une matière plastique.

8. Batterie suivant l'une ou plusieurs des revendications 1 à 7, caractérisée en ce que des processus rédox $Fe^{3+}/Fe^{2+}$ ont lieu à l'électrode positive.

9. Batterie suivant l'une ou plusieurs des revendications 1 à 8, caractérisée en ce que l'électrode positive est en graphite lié par une matière

plastique.

FIG 1

FIG 2